# EUROPÄISCHE PATENTSCHRIFT

(11) **EP 1 081 414 B1**
(45) Veröffentlichungstag und Bekanntmachung des Hinweises auf die Patenterteilung: **21.02.2007**
(21) Anmeldenummer: 00116063.9
(22) Anmeldetag: 27.07.2000
(51) Int. Cl.: F16H 59/02, F16H 59/08

(54) **Schalteinrichtung zur Steuerung eines Automatik-Getriebes eines Kraftfahrzeuges**
Selector mechanism for controlling an automatic transmission of a motor vehicle
Dispositif de changement de vitesses pour commander une transmission automatique de véhicule automobile

(30) Priorität: 28.08.1999 DE 19941013
(43) Veröffentlichungstag der Anmeldung: 07.03.2001
(73) Patentinhaber: Volkswagen Aktiengesellschaft, 38436 Wolfsburg (DE)
(72) Erfinder: Hinrichsen, Uwe, Dr., 38124 Braunschweig (DE); Bothe, Edgar, 31224 Peine (DE); Becker, Volker, 38518 Gifhorn (DE); Schamscha, Axel, 38442 Wolfsburg (DE)
(74) Vertreter: Hübsch, Dirk

(56) Entgegenhaltungen:
- DE-A- 4 305 903
- DE-A- 4 311 852
- DE-A- 19 754 250

## Beschreibung

Die Erfindung betrifft eine Schalteinrichtung zur Steuerung eines Automatik-Getriebes eines Kraftfahrzeuges, mit den Merkmalen des Oberbegriffs von Anspruch 1, wie bekannt aus DE-A-19754250.

Bei den bisher bekannten Automatik-Getrieben für Kraftfahrzeuge, die über eine Tasteinrichtung verfügen, ist grundsätzlich eine Umschaltung zwischen dem Automatik-Modus und dem Hand-Schalt-Modus, nämlich insbesondere dem Tiptronic-Modus möglich. Im Tiptronic-Modus werden über eine Tasteinrichtung die am oder in der Nähe des Lenkrades vorgesehen ist, die Hoch- bzw. Rückschaltvorgänge ausgelöst. Grundsätzlich weist die Tiptronic-Tasteinrichtung zwei separate Taster auf, wobei ein erster Taster für die Hochschaltvorgänge (+) und ein zweiter Taster für die Rückschaltvorgänge (-) vorgesehen ist und bei einfacher Betätigung des jeweiligen Taster ein einziger Schaltvorgang (Hoch- oder Rückschaltvorgang) ausgelöst wird.

Weiterhin ist das Automatik-Getriebe, wenn dieses im Automatik-Modus betrieben wird, die Tasteinrichtung also funktionslos ist, mit unterschiedlichen Getriebe-Fahrprogrammen betreibbar, die insbesondere im Steuergerät entsprechend gespeichert sind. Beispielsweise kann im Automatik-Modus ein _{"}Economy-Programm" oder auch _{"}Sport-Programm" durch den Fahrer ausgewählt werden. Bei der Auswahl des _{"}Economy-Programmes" gewährleistet die Schalteinrichtung eine _{"}benzinsparende" Schaltung des Automatik-Getriebes, insbesondere in Abhängigkeit der Drehzahlen des Motors bzw. der jeweils entsprechend ermittelten Fahrzeuggeschwindigkeit. Bei der Auswahl eines _{"}Sport-Programmes" wird - im Vergleich zum _{"}Economy-Programm" - erst hochgeschaltet, wenn höhere Drehzahlen des Motors vorliegen, so daß insbesondere hohe Beschleunigungen erziehlt werden können. Es können z.B. auch mehrere unterschiedliche Getriebe-Fahrprogramme realisiert werden, die bspw. unterschiedlich graduell abgestufte Sportlichkeitsstufen aufweisen, so daß - je nach Auswahl des Getriebe-Fahrprogrammes - das Fahrverhalten des Kraftfahrzeuges ein mehr dynamisches oder mehr komfortables Verhalten zeigt. Wird das Automatik-Getriebe im Automatik-Modus betrieben, so ist die Tasteinrichtung ohne Funktion.

So ist zusätzlich aus der DE-C-37 17 675 eine Schalteinrichtung bekannt, die einen im Fahrzeugraum bewegbar angeordeten Wählhebel aufweist, der in einer Wählhebelgasse zur Betätigung eines automatischen Getriebes entsprechende Positionen (P, R, N, D, 3, 2 und 1) einnehmen kann. Durch die hier beschriebene Schalteinrichtung wird das automatische Ge-triebe elektrohydraulisch gesteuert, wobei unterschiedliche Getriebe-Fahrprogramme, nämlich ein Economy- Programm und ein Sport-Programm auswählbar sind. Um nun das entsprechende Getriebe-Fahrprogramm auszuwählen, weist der Wählhebel der Schalteinrichtung an seinem oberen Ende einen separaten Betätigungsknopf auf. Durch Betätigung dieses Betätigungsknopfes, beispielsweise durch Eindrücken, kann nunmehr vom Economy-Programm auf das Sport-Programm umgeschaltet werden, wenn dies vom Fahrer gewünscht wird.

Weiter ist im Stand der Technik eine Schalteinrichtung bekannt (DE-A-195 47 750), mit deren Hilfe auch ein Automatik-Getriebe für ein Kraftfahrzeug betreibbar ist. Die Schalteinrichtung weist einen Wählhebel auf, der in einer ersten und in einer zweiten Wählhebelgasse bewegbar ist. In der ersten, im wesentlichen vertikal verlaufenden Wählhebelgasse sind die üblichen Wählhebelpositionen P, R, N, D, 3, 2 und 1 einlegbar. In der zweiten Wählhebelgasse, die im Vergleich zur ersten Wählhebelgasse ebenfalls in vertikaler Richtung verläuft, aber in ihrer Gesamtlänge kürzer ausgebildet ist, kann der Wählhebel in die Position _{"}+" und in die Position _{"}-" bewegt werden, um nämlich das Automatik-Getriebe im manuellen Hand-Schalt-Modus entsprechend zu betreiben. Die erste und die zweite Wählhebelgasse sind durch eine Quergasse miteinander verbunden, die im Bereich der Position _{"}D" der ersten Wählhebelgasse vorgesehen ist und im wesentlichen im rechten Winkel zu den beiden Wählhebelgassen verläuft. Ebenfalls ist diese Schalteinrichtung so ausgeführt, daß unterschiedliche Getriebe-Fahrprogramme mit Hilfe der Schalteinrichtung realisierbar ist, wenn das automatisierte Schaltgetriebe im Automatik-Modus betrieben wird (Position D). Eine Umschaltung von einem ersten Getriebe-Fahrprogramm, beispielsweise Economy-Programm in ein zweites Getriebe-Fahrprogramm, bspw. ein _{"}Sport-Programm", ist dadurch möglich, daß der Wählhebel, von der Schaltposition P aus der ersten Wählhebelgasse über die Quergasse in die zweite Wählhebelgasse geführt wird, ohne daß er hier in die Positionen _{"}+" bzw. _{"}-" bewegt wird. Anders ausgedrückt, durch die Bewegung des Wählhebels aus der ersten Wählhebelgasse in die zweite Wählhebelgasse, also beim Durchlaufen der Quergasse kann ein anderes Getriebe-Fahrprogramm für den Automatik-Modus ausgewählt werden.

Die bisher bekannten Techniken zur Umschaltung bzw. Auswahl der unterschiedlichen Getriebe-Fahrprogramme im Automatik-Modus eines Automatik-Getriebes sind nicht optimal. Einerseits ist bei dem Wählhebel der bekannten Schalteinrichtung (DE-C-37 17 675) ein separater Betätigungstaster im oberen Bereich, nämlich am Kopf des Wählhebels vorgesehen, wodurch der konstruktive Aufwand groß ist. Zwar ist bei der Schalteinrichtung gemäß der DE-A-195 74 750 solch ein separater Betätigungstaster nicht vorgesehen, jedoch muß hier, um das Getriebe-Fahrprogramm entsprechend zu wechseln, der Wählhelbel aus der ersten Wählhebelgasse in Richtung der zweiten Wählhebelgasse über die Quergasse geführt werden, wobei die Praxis gezeigt hat, daß der Fahrer bei der Auswahl des entsprechenden Getriebe-Fahrprogrammes den Wählhelbel in die zweite Wählhebelgasse führt, aber auch hier bereits -unbeabsochtigterweise- schon mal in vertikaler Richtung bewegt, so daß hier der Hand-Schalt-Modus des Automatik-Getriebes eingelegt werden kann und dann entsprechend betätigt wird, obwohl der Fahrer nur das Getriebe-Fahrprogramm im Automatik-Modus des Getriebes wechseln wollte. Im Ergebnis bleibt daher festzuhalten, daß die im Stand der Technik bekannte bzw. üblichen _{"}Umschalt-Techniken" für die Auswahl der unterschiedlichen Getriebe-Fahrprogramme nicht nur konstruktiv sehr aufwendig sind, wobei das mit hohen Kosten verbunden ist, sondern auch eine genaue und konzentrierte Bedienung der entsprechenden Wählhebel durch den Fahrer notwendig ist.

Der Erfindung liegt daher die Aufgabe zugrunde, die eingangs erwähnte Schalteinrichtung derart auszugestalten und weiterzubilden, daß der konstruktive Aufwand und die Kosten verringert sind, insbesondere das Umschalten bzw. die Auswahl der unterschiedlichen Getriebe-Fahrprogramme durch den Fahrer auf besonders einfache Weise möglich ist.

Die zuvor aufgezeigte Aufgabe wird durch die Merkmale des Anspruchs 1 gelöst. Die Schalteinrichtung ist so ausgeführt, daß bei eingeschalteten Automatik-Modus des Automatik-Getriebes die unterschiedlichen Getriebe-Fahrprogramme durch die entsprechende Betätigung der Tasteinrichtung auswählbar sind. Dadurch, daß nun mit Hilfe der Tasteinrichtung, die ohnehin nunmehr für die Schaltung des Automatik-Getriebes im Hand-Schalt-Modus vorgesehen ist, nunmehr auch die unterschiedlichen Getriebe-Fahrprogramme auswählbar sind, kann der konstruktive Aufwand und damit die Kosten erheblich verringert werden, weil die Anordnung von weiteren separaten Tastern oder Betätigungsknöpfen entfällt. Die bisher im Stand der Technik vorgesehene und im Automatik-Modus des Automatik-Getriebes funktionslose Tasteinrichtung wird nun genau in diesem Modus funktionsfähig geschaltet, so daß mit Hilfe der Tasteinrichtung nunmehr die unterschiedlichen Getriebe-Fahrprogramme von Fahrer auf einfache Art und Weise, ohne das hier eine besondere Konzentration des Fahrers notwendig ist, ausgewählt werden können. Die eingangs beschriebenen Nachteile sind dadurch verhindert.

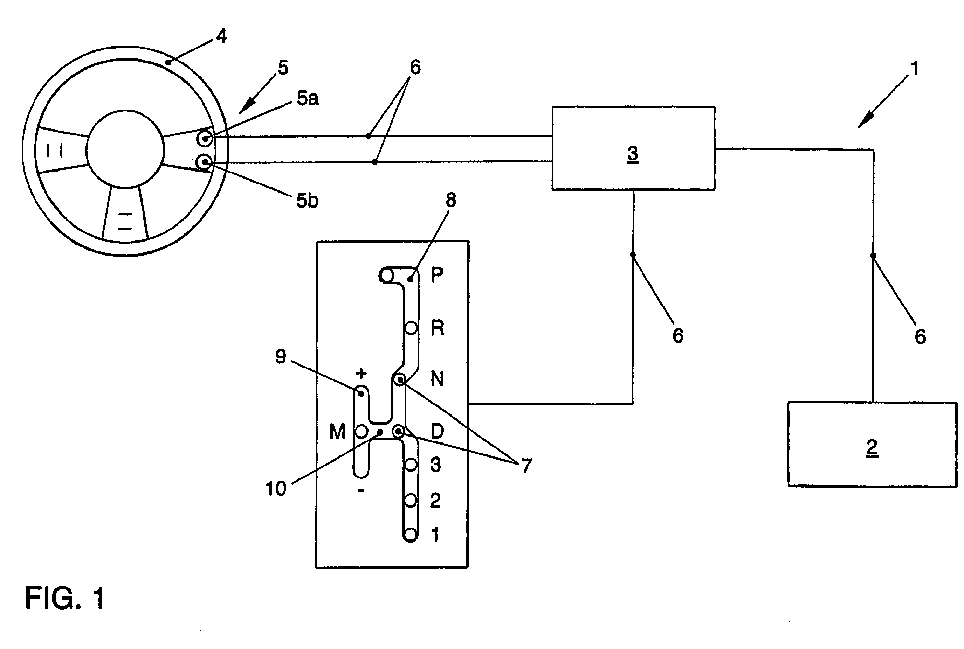

Es gibt nun eine Vielzahl von Möglichkeiten, die erfindungsgemäße Schalteinrichtung in vorteilhafter Weise auszugestalten und weiterzubilden. Hierfür darf an dieser Stelle auf die dem Patentanspruch 1 nachgeordneten Patentansprüche verwiesen werden. Im folgenden soll nun eine bevorzugte Ausführungform der Erfindung anhand einer Beschreibung und einer Zeichnung näher erläutert werden. In der Zeichnung zeigt
- Fig. 1: in vereinfachter schematischer Darstellung die erfindungsgemäße Schalteinrichtung.

Fig. 1 zeigt eine Schalteinrichtung 1 zur Steuerung eines Automatik-Getriebes 2, daß hier als automatisiertes Schaltgetriebe ausgeführt ist, eines hier nicht dargestellten Kraftfahrzeuges. Das Automatik-Getriebe 2 ist im Automatik-Modus oder im Hand-Schalt-Modus betreibbar. Für die Realisierung der einzelnen Schaltungen ist ein Steuergerät 3 vorgesehen. Im Automatik-Modus des Automatik-Getriebes 2 sind mindestens zwei unterschiedliche Getriebe-Fahrprogramme vom Fahrer auswählbar. Bei der bevorzugten Ausführungsform kann der Fahrer ein _{"}Economy-Programm" oder ein _{"}Sport-Programm" auswählen, das dann mit Hilfe des Steuergerätes 3 realisierbar ist bzw. die entsprechenden Schaltungen im Getriebe 2 dann mit Hilfe des Steuergerätes 3 umsetzbar sind. Im Bereich des Lenkrades 4 ist eine Tasteinrichtung 5 vorgesehen, mit deren Hilfe die Hoch- bzw. Rückschaltungen im Hand-Schalt-Modus des Automatik-Getriebes 2 ausführbar sind. Die entsprechenden Bestandteile der Schalteinrichtung 1 sind hier über Steuerleitungen 6 schaltungstechnisch miteinander verbunden.

Weiterhin weist die Schalteinrichtung 1 einen Wählhebel 7 auf, dessen unterschiedliche Positionierungsmöglichkeiten in einer ersten Wählhebelgasse 8 durch mehrere kreisförmige Darstellungen entsprechend angedeutet ist. Der Wählhelbel 7 ist in der ersten Wählhebelgasse 8 in die Positionen P für Parken, R für Rückwärts, N für Neutral, D für Automatik-Modus und 3, 2 und 1 einlegbar bzw. stellbar. In den Schaltpositionen 3, 2 und 1 werden die möglichen Hochschaltungen begrenzt bzw. nicht zugelassen. Zusätzlich ist eine zweite Wählhebelgasse 9 für den Wählhebel 7 für den Betrieb des Hand-Schalt-Modus vorgesehen. Hierzu ist die erste und die zweite Wählhebelgasse 8 und 9 über eine Quergasse 10 miteinander verbunden. Innerhalb der zweiten Wählhebelgasse 9 kann der Wählhebel 7 in die Position + bzw. in die Position - gefahren werden, um so die entsprechenden Hoch- bzw. Rückschaltungen zu realisieren. Allerdings ist diese zweite Wählhebelgasse 9 hier nur zusätzlich vorgesehen, da die Hoch- bzw. Rückschaltungen im Hand-Schalt-Modus des Getriebes 2 über die hier im Bereich des Lenkrades 4 vorgesehene Tasteinrichtung 5 vom Fahrer primär realisiert werden.

Die hier dargestellte Tasteinrichtung 5 kann, die als "Tiptronic-Tasteinrichtung" ausgeführt ist, einen einzigen, bspw. einen wippenförmigen Taster aufweisen. Jedoch weist die Tasteinrichtung 5 hier zwei separate Betätigungsschalter 5a und 5b auf. Mit Hilfe des Steuergerätes 3 ist nun ein Automatik-Modus des Getriebes 2 oder auch ein Hand-Schalt-Modus des Getriebes 2 betreibbar, wobei der Automatik-Modus dann eingelegt ist, wenn der Wählhebel 7 in der Position D steht und der Hand-Schalt-Modus eingelegt ist, wenn der Wählhebel 7 in der Position M steht. Es ist aber auch denkbar, daß eben keine zweite Wählhebelgasse 9 vorgesehen ist und der Modus des Getriebes über ein zusätzlich vorgesehenen, hier nicht dargestellten Taster entsprechend vom Fahrer gewählt wird, also aus dem Automatik-Modus in den Hand-Schalt-Modus geschaltet werden kann.

Die eingangs beschriebenen Nachteile sind nun dadurch vermieden, daß die Schalteinrichtung 1 so ausführt ist, daß bei eingeschalteten Automatik-Modus des Automatik-Getriebes 2 die unterschiedlichen Getriebe-Fahrprogramme durch die entsprechenden Betätigung der Tasteinrichtung 5 auswählbar sind. Anders ausgedrückt, bei vom Fahrer ausgewählten Hand-Schalt-Modus für das Getriebe 2 können über die Tasteinrichtung 5 nunmehr die entsprechend abgespeicherten Getriebe-Fahrprogramme über die Tasteinrichtung 5 ausgewählt werden, die ja sowieso im Bereich des Lenkrades 4 vorgesehen ist. Folglich entfallen wie bisher im Stand der Technik üblich, die separaten Bedienungselemente bzw. Taster und der Fahrer kann auf einfache Art und Weise die entsprechenden Getriebe-Fahrprogramme auswählen.

Die Schalteinrichtung 1 ist hier auf elektrische und/oder elektronischer Basis ausgeführt, beispielsweise weist das Steuergerät 3 ein entsprechenden Mikroprozessor auf, so daß im Steuergerät 3 verschiedene Getriebe-Fahrprogramme bzw. Kenndaten, insbesondere zum Betrieb des Automatik-Getriebes 2 im Automatik-Modus gespeichert sind. In Abhängigkeit des vom Fahrer ausgewählten Getriebe-Fahrprogrammes, beispielsweise ein Economy-Programm oder auch ein Sport-Programm, das dem Fahrer in einem Display, vzw. innerhalb der Kombiinstrumententafel entsprechend angezeigt wird, wird dann mit Hilfe der erfindungsgemäßen Schalteinrichtung 1 genau das vom Fahrer ausgewählte Getriebe-Fahrprogramm angewählt und durchgeführt, so wie im Stand der Technik bisher üblich, so daß hier auf Einzelheiten der Erörterung verzichtet wird. Weiterhin werden unterschiedliche Kenndaten, die zur Ermittlung des Fahrbetriebszustandes des Kraftfahrzeugs notwendig sind entsprechend ermittelt, wie beispielsweise die Motordrehzahl, das Motordrehmoment, Getriebabtriebsdrehzahl bzw. -moment, aktuelle Fahrzeuggeschwindigkeit, etc.

Entscheidend ist, daß durch die im Automatik-Modus des Getriebes 2 entsprechend funnktionstüchtig geschaltete Tasteinrichtung 5 nunmehr mit Hilfe der Tasteinrichtung 5 entsprechend einfach für den Fahrer die Getriebe-Fahrprogramme im Automatik-Modus ausgewählt werden können, ob dies nun ein Economy-Programm, ein Sport-Programm, ein Komfort-Programm oder auch ein entsprechend dem Fahrzeugtyp ausgestattetes anderweitiges Getriebe-Fahrprogramm ist.

### BEZUGSZEICHENLISTE

- 1: Schalteinrichtung
- 2: Automatik-Getriebe
- 3: Steuergerät
- 4: Lenkrad
- 5: Tasteinrichtung
- 5a, b: Betätigungsschalter
- 6: Steuerleitung
- 7: Wählhebel
- 8: erste Wählhebelgasse
- 9: zweite Wählhebelgasse
- 10: Quergasse

## Patentansprüche

1. Schalteinrichtung (1) zur Steuerung eines Automatik-Getriebes (2) eines Kraftfahrzeugs, wobei das Automatik-Getriebe (2) im Automatik-Modus oder im Hand-Schalt-Modus betreibbar ist, wobei für die Realisierung der einzelnen Schaltungen ein Steuergerät (3) vorgesehen ist und im Automatik-Modus mindestens zwei unterschiedliche Getriebe-Fahrprogramme, insbesondere ein Economy-Programm und ein Sport-Programm, vom Fahrer auswählbar und mit Hilfe des Steuergerätes (3) realisierbar sind und wobei ein Wählhebel (7) innerhalb einer ersten Wählhebelgasse (8) zumindest in die Position P, R, N und D bewegbar ist, **dadurch gekennzeichnet, dass** zusätzlich eine Wählhebelgasse (9) für den Wählhebel (7) für den Betrieb des Hand-Schalt-Modus vorgesehen ist, dass im Bereich des Lenkrades (4) eine Tasteinrichtung (5) vorgesehen ist, mit deren Hilfe die Hoch- bzw. Rückschaltungen im Hand-Schalt-Modus ausführbar sind, und dass die Schalteinrichtung (1) so ausgeführt ist, dass bei eingeschaltetem Automatik-Modus des Automatik-Getriebes (2) die unterschiedlichen Getriebe-Fahrprogramme durch die entsprechende Betätigung der Tasteinrichtung (5) auswählbar sind.

2. Schalteinrichtung nach Anspruch 1, **dadurch gekennzeichnet, daß** die Tasteinrichtung (5) einen wippenförmigen Taster aufweist.

3. Schalteinrichtung nach Anspruch 1, **dadurch gekennzeichnet, daß** die Tasteinrichtung (5) zwei seperate Betätigungsschalter (5a, 5b) aufweist.

4. Schalteinrichtung nach einem der vorstehenden Ansprüche, **dadurch gekennzeichnet, daß** ein in einer ersten Wählhebelgasse (8) bewegbarer Wählhebel (7) vorgesehen ist.

5. Schalteinrichtung nach einem der vorstehenden Ansprüche, **dadurch gekennzeichnet, daß** der Wählhebel (7) auf der Mittelkonsole des Fahrzeugs angeordnet ist.

6. Schalteinrichtung nach einem der vorstehenden Ansprüche, **dadurch gekennzeichnet, daß** die Schalteinrichtung (1) auf elektrischer und/oder elektronischer Basis ausgeführt ist.

7. Schalteinrichtung nach einem der vorstehenden Ansprüche, **dadurch gekennzeichnet, daß** das Steuergerät (3) einen Mikroprozessor aufweist.

8. Schalteinrichtung nach einem der vorstehenden Ansprüche, **dadurch gekennzeichnet, daß** im Steuergerät (3) verschiedene Getriebe-Fahrprogramme bzw. Kenndaten zum Betrieb des Getriebes (2) im Automatik-Modus gespeichert sind.

9. Schalteinrichtung nach einem der vorstehenden Ansprüche, **dadurch gekennzeichnet, daß** das vom Fahrer ausgewählte Getriebe-Fahrprogramm in einem Display, vzw. innerhalb der Kombiinstrumententafel entsprechend anzeigbar ist.

10. Schalteinrichtung nach einem der vorstehenden Ansprüche, **dadurch gekennzeichnet, daß** die erste und die zweite Wählhebelgasse (8, 9) über eine Quergasse (10) miteinander verbunden sind.

11. Schalteinrichtung nach einem der vorstehenden Ansprüche, **dadurch gekennzeichnet, daß** die Tasteinrichtung (5) als Tiptronic-Tasteinrichtung ausgeführt ist.

12. Schalteinrichtung nach einem der vorstehenden Ansprüche; **dadurch gekennzeichnet; daß** das Automatik-Getriebe (2) als automatisiertes Schaltgetriebe ausgeführt ist.

## Claims

1. Shifting arrangement (1) for controlling an automatic transmission (2) of a motor vehicle, the automatic transmission (2) being operable in automatic mode or in manual shift mode, a control unit (3) being provided for executing the individual shifts, at least two different transmission drive programs, in particular an economy program and a sport program, being selectable by the driver and executable with the aid of the control unit (3) in automatic mode, and a selector lever (7) being movable within a first selector lever channel (8) at least to the positions P, R, N and D, **characterized in that** a selector lever channel (9) for the selector lever (7) is additionally provided for operating the manual shift mode, **in that** a pushbutton arrangement (5) by means of which the upshifts and downshifts can be executed in manual shift mode is provided in the region of the steering wheel (4), and **in that** the shifting arrangement (1) is so configured that when the automatic mode of the automatic transmission (2) is selected the different transmission drive programs are selectable by corresponding actuation of the pushbutton arrangement (5).

2. Shifting arrangement according to Claim 1, **characterized in that** the pushbutton arrangement (5) includes a rocker-type pushbutton.

3. Shifting arrangement according to Claim 1, **characterized in that** the pushbutton arrangement (5) includes two separate actuating switches (5a, 5b).

4. Shifting arrangement according to one of the preceding claims, **characterized in that** a selector lever (7) movable in a first selector lever channel (8) is provided.

5. Shifting arrangement according to one of the preceding claims, **characterized in that** the selector lever (7) is arranged on the centre console of the vehicle.

6. Shifting arrangement according to one of the preceding claims, **characterized in that** the shifting arrangement (1) is implemented on an electrical and/or electronic basis.

7. Shifting arrangement according to one of the preceding claims, **characterized in that** the control unit (3) includes a microprocessor.

8. Shifting arrangement according to one of the preceding claims, **characterized in that** different transmission drive programs and characteristic data for operating the transmission (2) in automatic mode are stored in the control unit (3).

9. Shifting arrangement according to one of the preceding claims, **characterized in that** the transmission drive program selected by the driver can be appropriately displayed in a display, preferably within the instrument cluster panel.

10. Shifting arrangement according to one of the preceding claims, **characterized in that** the first and second selector lever channels (8, 9) are connected to one another via a transverse channel (10).

11. Shifting arrangement according to one of the preceding claims, **characterized in that** the pushbutton arrangement (5) is in the form of a Tiptronic pushbutton arrangement.

12. Shifting arrangement according to one of the preceding claims, **characterized in that** the automatic transmission (2) is in the form of an automated manual transmission.

## Revendications

1. Dispositif de changement de rapport (1) pour commander une boîte de vitesses automatique (2) d'un véhicule automobile, la boîte de vitesses automatique (2) pouvant fonctionner en mode automatique ou en mode de changement de rapport manuel, un appareil de commande (3) étant prévu pour la réalisation des changements de rapport individuels et au moins deux programmes de conduite différents de la boîte de vitesses, notamment un programme économique et un programme sportif, pouvant être sélectionnés par le conducteur en mode automatique et pouvant être réalisés à l'aide de l'appareil de commande (3) et un levier de sélection (7) pouvant être déplacé à l'intérieur d'une première voie de levier de sélection (8) au moins dans la position P, R, N et D, **caractérisé en ce qu'**il est en plus prévu une voie de levier de sélection (9) pour le levier de sélection (7) pour le fonctionnement en mode de changement de rapport manuel, qu'un dispositif à touches (5) est prévu dans la zone du volant (4), à l'aide duquel peuvent être commandés les passages aux rapports supérieurs ou inférieurs en mode de changement de rapport manuel et que le dispositif de changement de rapport (1) est réalisé de telle sorte que lorsque le mode automatique de la boîte de vitesses automatique (2) est activé, les différents programmes de conduite de la boîte de vitesses peuvent être sélectionnés par un actionnement en conséquence du dispositif à touches (5).

2. Dispositif de changement de rapport selon la revendication 1, **caractérisé en ce que** le dispositif à touches (5) présente une touche en forme de bascule.

3. Dispositif de changement de rapport selon la revendication 1, **caractérisé en ce que** le dispositif à touches (5) présente deux commutateurs d'actionnement (5a, 5b) séparés.

4. Dispositif de changement de rapport selon l'une des revendications précédentes, **caractérisé en ce qu'**il est prévu un levier de sélection (7) pouvant être déplacé dans une première voie de levier de sélection (8).

5. Dispositif de changement de rapport selon l'une des revendications précédentes, **caractérisé en ce que** le levier de sélection (7) est disposé sur la console centrale du véhicule.

6. Dispositif de changement de rapport selon l'une des revendications précédentes, **caractérisé en ce que** le dispositif de changement de rapport (1) est réalisé sur une base électrique et/ou électronique.

7. Dispositif de changement de rapport selon l'une des revendications précédentes, **caractérisé en ce que** l'appareil de commande (3) présente un microprocesseur.

8. Dispositif de changement de rapport selon l'une des revendications précédentes, **caractérisé en ce que** différents programmes de conduite de la boîte de vitesses ou différentes caractéristiques de fonctionnement de la boîte de vitesses (2) en mode automatique sont enregistrés dans l'appareil de commande (3).

9. Dispositif de changement de rapport selon l'une des revendications précédentes, **caractérisé en ce que** le programme de conduite de la boîte de vitesses sélectionné par le conducteur peut être affiché en conséquence sur un afficheur, de préférence au sein du tableau de bord combiné.

10. Dispositif de changement de rapport selon l'une des revendications précédentes, **caractérisé en ce que** la première et la deuxième voies du levier de sélection (8, 9) sont reliées entre elles par une voie transversale (10).

11. Dispositif de changement de rapport selon l'une des revendications précédentes, **caractérisé en ce que** le dispositif à touches (5) est réalisé sous la forme d'un dispositif à touche Tiptronic.

12. Dispositif de changement de rapport selon l'une des revendications précédentes, **caractérisé en ce que** la boîte de vitesses automatique (2) est réalisée sous la forme d'une boîte de vitesses automatisée.
